# EUROPÄISCHE PATENTSCHRIFT

(11) **EP 3 786 853 B1**
(45) Veröffentlichungstag und Bekanntmachung des Hinweises auf die Patenterteilung: **10.09.2025**
(21) Anmeldenummer: 20183640.0
(22) Anmeldetag: 02.07.2020
(51) Int. Cl.: G06N 3/063, G06N 3/08

(54) **KOMPRIMIEREN EINES TIEFEN NEURONALEN NETZES**
COMPRESSION OF A DEEP NEURAL NETWORK
COMPRESSION D'UN RÉSEAU DE NEURONES PROFOND

(30) Priorität: 28.08.2019 DE 102019212912
(43) Veröffentlichungstag der Anmeldung: 03.03.2021
(73) Patentinhaber: Robert Bosch GmbH, 70442 Stuttgart (DE)
(72) Erfinder: Pfeil, Thomas, 71272 Renningen (DE)

(56) Entgegenhaltungen:
- EUNHYEOK PARK ET AL: "Precision Highway for Ultra Low-Precision Quantization", 23 December 2018 (2018-12-23), XP055755858, Retrieved from the Internet <URL:https://arxiv.org/pdf/1812.09818.pdf>
- SONG HAN ET AL: "Deep Compression: Compressing Deep Neural Networks with Pruning, Trained Quantization and Huffman Coding", 15 February 2016 (2016-02-15), XP055393078, Retrieved from the Internet <URL:https://arxiv.org/pdf/1510.00149v5.pdf> [retrieved on 20170721]
- MINNEHAN BRETON ET AL: "Cascaded Projection: End-To-End Network Compression and Acceleration", 2019 IEEE/CVF CONFERENCE ON COMPUTER VISION AND PATTERN RECOGNITION (CVPR), IEEE, 15 June 2019 (2019-06-15), pages 10707 - 10716, XP033687276, DOI: 10.1109/CVPR.2019.01097
- LIU ZECHUN ET AL: "Bi-Real Net: Enhancing the Performance of 1-Bit CNNs with Improved Representational Capability and Advanced Training Algorithm", 7 October 2018, PATTERN RECOGNITION : 5TH ASIAN CONFERENCE, ACPR 2019, AUCKLAND, NEW ZEALAND, NOVEMBER 26-29, 2019, REVISED SELECTED PAPERS, PART II; [LECTURE NOTES IN COMPUTER SCIENCE], SPRINGER INTERNATIONAL PUBLISHING, CHAM, PAGE(S) 747 - 763, ISBN: 978-3-030-41298-2, ISSN: 0302-9743, XP047635654

## Beschreibung

### Technisches Gebiet

Die Erfindung betrifft ein Verfahren zum Komprimieren eines tiefen neuronalen Netzes unter Verwendung einer Überbrückungsverbindung. Die Erfindung betrifft ferner ein Computerprogramm und eine Vorrichtung, die jeweils eingerichtet sind, das Verfahren auszuführen.

### Stand der Technik

Die nicht vorveröffentlichte Patentanmeldung DE 10 1218 216 471.1 offenbart ein maschinelles Lernsystem, welches eine Mehrzahl von Schichten umfasst. Die Parameter derjenigen Schichten, die mit einer weiteren Schicht verbunden sind, weisen jeweils eine höhere Auflösung auf, als die Parameter derjenigen Schichten, die mit einer Mehrzahl von weiteren Schichten verbunden sind.

LIU ZECHUN ET AL: "Bi-Real Net: Enhancing the Performance of 1-Bit CNNs with Improved Representational Capability and Advanced Training Algorithm", 7. Oktober 2018 (2018-10-07), PATTERN RECOGNITION : 5TH ASIAN CONFERENCE, ACPR 2019, AUCKLAND, NEW ZEALAND, NOVEMBER 26-29, 2019, REVISED SELECTED PAPERS, PART II; [LECTURE NOTES IN COMPUTER SCIENCE], SPRINGER INTERNATIONAL PUBLISHING, CHAM, PAGE(S) 747 - 763, offenbaren ein Bi-Real-Netz, das die realen Aktivierungen (nach der 1-Bit-Faltung und/oder der BatchNorm-Schicht, vor der Vorzeichenfunktion) mit den Aktivierungen des nachfolgenden Blocks durch eine Identitätsverknüpfung verbindet.

### Offenbarung der Erfindung

In einem ersten Aspekt wird ein, insbesondere computerimplementiertes, Verfahren zum Komprimieren eines tiefen neuronalen Netzes vorgestellt. Das tiefe neuronale Netz kann ein bereits erstelltes tiefes neuronales Netz sein und umfasst eine Mehrzahl von Schichten, die nach einer vorgebbaren Reihenfolge jeweils eingangsseitig mit ihrer unmittelbar vorhergehenden Schicht der Reihenfolge verbunden sind. Unter einem erstellten tiefen neuronalen Netz wird ein tiefes neuronales Netz mit einer fixen Architektur oder vorgegebenen Struktur verstanden. Parameter sind jeweils den Schichten zugeordnet, wie bspw. Gewichte oder Filter. Die Schichten können jeweils eingerichtet sein, Aktivierungen abhängig von mindestens einer Eingangsgröße der jeweiligen Schicht und abhängig von den Parametern, die der jeweiligen Schicht zugeordnet sind, zu ermitteln.

Das Verfahren umfasst folgende Schritte. Hinzufügen einer Überbrückungsverbindung (engl. skip connection). Die hinzugefügte Überbrückungsverbindung ist dann eine neue, zusätzliche Verbindung in dem tiefen neuronalen Netz, welche im erstellten tiefen neuronalen Netz nicht vorgesehen war. Die Überbrückungsverbindung verbindet eine der Schichten eingangsseitig zusätzlich mit einer weiteren Schicht, die eine mittelbar vorhergehende Schicht in der Reihenfolge ist. Eine vorhergehende Schicht ist eine Schicht, die in der Reihenfolge der Schichten vor der Schicht, die eingangsseitig die Überbrückungsverbindung aufweist, angeordnet ist. Die Überbrückungsverbindung endet an der Schicht, welche eingangsseitig mit der Überbrückungsverbindung verbunden ist und beginnt bei der vorhergehenden Schicht, welche durch die Überbrückungsverbindung mit der eingangsseitig verbundenen Schicht verbunden wird. Anspruchsgemäß erfolgt nach dem Schritt des Hinzufügens der Überbrückungsverbindung ein Bereitstellen von Trainingsdaten, die jeweils Eingangsgrößen und den Eingangsgrößen zugeordnete Ausgangsgrößen umfassen und ein Anlernen des tiefen neuronalen Netzes. Daraufhin folgt ein Reduzieren einer Auflösung, insbesondere Quantisieren, der Parameter der Schichten. Anspruchsgemäß erfolgt das Reduzieren einer Auflösung der Parameter der Schichten des angelernten neuronalen Netzes umfassend die hinzugefügte Überbrückungsschicht, wobei eine Auflösung der Parameter der Schichten durch eine Anzahl der Bit gegeben ist.

Daraufhin kann nun das durch die Reduktion der Auflösung komprimierte tiefe neuronale Netz in einem Speicher hinterlegt werden. Es sei angemerkt, dass zumindest die Parameter in einem Speicher hinterlegt werden, wodurch mittels einer Reduktion deren Auflösungen weniger Speicherplatz zum Hinterlegen dieser Parameter benötigt wird. Zusätzlich oder alternativ kann daraufhin dieses tiefe neuronale Netz in Betrieb genommen werden. Unter "in Betrieb nehmen" kann verstanden werden, dass das tiefe neuronale Netz abhängig von bereitgestellten Eingangsgrößen jeweils eine Ausgangsgröße ermittelt.

Es wurde erkannt, dass durch die Überbrückungsverbindung mehr Informationen (teilweise mit Redundanzen) durch das tiefe neuronale Netz mit der Überbrückungsverbindung übermittelt werden, wodurch eine stärkere Reduktion der Auflösungen gegenüber dem neuronalen Netz ohne Überbrückungsverbindung erzielt werden kann. Durch das Hinzufügen der Überbrückungsverbindung kann das tiefe neuronale Netz anschließend stärker quantisiert werden kann. Daher liegt der Vorteil des Verfahrens darin, dass durch die zwei vorgeschlagenen Verfahrensschritte ein besonders speicher- und recheneffizientes tiefes neuronales Netz erzeugt werden kann.

Das Verfahren des ersten Aspekts weist ferner den Vorteil auf, dass durch die reduzierte Auflösung der Parameter, diese Parameter in dem Speicher besonders effizient unter geringem Speicherplatzbedarf abgespeichert werden können, ohne das überraschenderweise eine Leistungsfähigkeit des tiefen neuronalen Netzes beeinträchtigt wird. Des Weiteren kann durch die reduzierte Auflösung der Parameter und/oder der Aktivierungen der Rechenbedarf dieses tiefen neuronalen Netzes reduziert werden. Beispielsweise kann durch ein geschicktes Ausnutzen der Rechenarchitektur und der geringeren Auflösung der Parameter, die Parameter parallel verarbeitet werden, z.B. durch Ausführen einer 32 Bit oder vier 8 Bit Rechenoperationen. Ein weiterer Vorteil ist, dass durch den resultierenden ressourcenschonenden Umgang, das tiefe neuronale Netz sowohl für stationäre (z. B. in Rechenzentren) als auch für mobile Anwendungen (z. B. mobile Datenverarbeitungsanlangen oder eingebettete Systeme) verwendet werden kann. Derartig komprimierte tiefe neuronale Netze eignen sich besonders dazu, gemessene Daten nahe am Sensor bzw. im Sensor selbst zu verarbeiten, womit gemessene Daten komprimiert und bandbreiteneffizienter übertragen werden können.

Dass die geringere Auflösung, insbesondere stärkere Quantisierung, der Parameter und/oder Aktivierungen nicht die Leistungsfähigkeit, insbesondere die Genauigkeit der Ergebnisse, des tiefen neuronalen Netzes verschlechtert, kommt daher, dass durch die zusätzlichen Verbindungen mit weiteren, unterschiedlichen Schichten, unterschiedlich verarbeitete Ausgangsgrößen bereitgestellt werden. Dadurch erhält diejenige Schicht, die eingangsseitig mit mehreren Schichten verbunden ist, mehr Informationen und die Eingangsgrößen können dadurch in einem besseren bzw. vollständigerer beschriebenen Zustandsraum dargestellt werden. Dadurch wird eine höhere Robustheit gegenüber Störungen erzielt, wodurch die Parameter und Aktivierungen bspw. stärker quantisiert werden können, ohne die Leistungsfähigkeit des tiefen neuronalen Netzes zu beeinträchtigen.

Das zu Beginn des Verfahrens initial erstellte tiefe neuronale Netz kann ein bereits (teilweise-)angelerntes, tiefes neuronales Netz sein. Alternativ kann das initial erstellte tiefe neuronale Netz ein neu initialisiertes, tiefes neuronales Netz sein. Das initial erstellte tiefe neuronale Netz kann nur vorwärtsgerichtete Verbindungen (engl. feed-forward network), also keine Überbrückungsverbindungen, aufweisen. Denkbar ist aber auch, dass das tiefe neuronale Netz vorm Ausführen des Verfahrens bereits eine oder mehrere Überbrückungsverbindungen aufweist. Dann können die Schichten mit einer oder mehreren vorhergehenden und/oder nachfolgenden Schichten verbunden sein. Unter einer vorhergehenden Schicht wird diejenige Schicht verstanden, die ihre Ausgangsgröße zeitlich vor der jeweiligen verbundenen Schicht ermittelt und ihre Ausgangsgröße der jeweiligen verbundenen Schicht als Eingangsgröße bereitstellt. Unter einer nachfolgenden Schicht wird diejenige Schicht verstanden, die als Eingangsgröße die Ausgangsgröße der jeweiligen verbundenen Schicht erhält. Der Vorteil beim Hinzufügen von weiteren Überbrückungsverbindungen zu einem tiefen neuronalen Netz mit bereits min. einer Überbrückungsverbindung ist, dass eine noch stärkere Reduktion der Auflösung erzielt werden kann. Denn je mehr Pfade durch das tiefe neuronale Netz, also unterschiedliche Überbrückungsverbindungen vorhanden sind, desto stärker kann die Auflösung reduziert werden.

Unter eingangsseitig verbunden kann verstanden werden, dass eine Ausgangsgröße einer der Schichten, insbesondere einer vorhergehenden und/oder einer nachfolgenden Schicht, als eine Eingangsgröße der mit dieser Schicht verbundenen Schicht verwendet wird.

Es sei angemerkt, dass eine Überbrückungsverbindung vorwärts- als auch rückwärts-gerichtet sein kann. D.h. Informationen können entlang der Überbrückungsverbindung in Richtung einer Informationsverarbeitungsrichtung des tiefen neuronalen Netzes, als auch in der entgegengesetzten Richtung zur Informationsverarbeitungsrichtung fließen. Unter der Informationsverarbeitungsrichtung kann die Richtung der Propagation der Eingangsgrößen durch das tiefe neuronale Netz verstanden werden, also vom Eingang zum Ausgang des tiefen neuronalen Netz.

Es sei ferner angemerkt, dass neben den Parametern auch eine Auflösung der Aktivierungen der Schichten reduziert werden kann.

Es wird vorgeschlagen, dass die Reduktion der Auflösung der Parameter abhängig davon ist, ob eine der Schichten mit einer Mehrzahl von Schichten unmittelbar eingangsseitig verbunden ist oder nicht. Denn es wurde erkannt, dass diejenigen Schichten, die eingangsseitig eine Überbrückungsverbindung aufweisen, stärker quantisiert werden können. Anhand einer stärkeren Quantisierung kann Speicherplatz und Rechenleistung eingespart werden. Es wird daher des Weiteren vorgeschlagen, dass die Auflösung der Parameter oder der Aktivierungen derjenigen Schicht, die mit einer Mehrzahl von, insbesondere vorhergehenden, Schichten unmittelbar eingangsseitig verbunden ist, geringerer ist als die Auflösung der Parameter oder der Aktivierungen derjenigen Schichten, die mit genau einer Schicht unmittelbar eingangsseitig verbunden sind.

Die Auflösung kann charakterisieren, mittels wie vielen unterschiedlichen möglichen, insbesondere diskreten, Größen jeweils die Parameter und/oder die Aktivierungen dargestellt werden. Zusätzlich oder alternativ kann die Auflösung eine Abweichung bzw. eine Genauigkeit der, z.B. in einem Speicher hinterlegten, Größen zu den ursprünglich ermittelten Größen der Parameter charakterisieren, beispielsweise mittels wie vielen Bit die Größen dargestellt werden. Zusätzlich oder alternativ kann die Auflösung eine Differenz zwischen zwei kleinsten Größen der Parameter und/oder der Aktivierungen oder der Differenz zwischen zwei nächstliegenden, insbesondere diskreten, Größen der Parameter und/oder der Aktivierungen charakterisieren.

Es wird vorgeschlagen, dass eine Anzahl von Bit, mittels der die Parameter, insbesondere in einem Speicher, hinterlegt sind, oder die Aktivierungen dargestellt werden, die Auflösung charakterisiert. Es wird ferner vorgeschlagen, dass jeweils die Auflösung der Parameter oder der Aktivierungen derjenigen Schicht, die mit einer Mehrzahl von Schichten unmittelbar eingangsseitig verbunden ist, um zumindest mehr als ein Bit geringer ist, als die Auflösung der Parameter oder der Aktivierungen derjenigen Schichten, die mit genau einer Schicht unmittelbar eingangsseitig verbunden sind.

Vorteilhaft hieran ist, dass durch die Verwendung weniger Bit zum Speichern der Parameter, ein kleinerer Speicher benötigt wird, der eine kompaktere Bauweise des tiefen neuronalen Netzes erlaubt. Da der Energieverbrauch für das Speichern und Lesen der Parameter und Aktivierungen proportional zu der Anzahl der Bit und für Multiplikationen quadratisch zu der Auflösung (in Bit) der Parameter und Aktivierungen ist, ist eine Reduktion der Anzahl der Bit, insbesondere durch eine Quantisierung, besonders computerressourceneffizient.

Weiterhin wird vorgeschlagen, dass bereits die Parameter des bereitgestellten tiefen neuronalen Netzes, insbesondere anhand einer vorgebbaren Anzahl von Bit, quantisiert sind. Die Reduktion der Auflösung der Parameter der Schichten wird dann durch eine Reduktion einer Wortbreite reduziert. Die Wortbreite kann eine Anzahl von Bit zur Darstellung der quantisierten Parameter charakterisieren. Denkbar ist auch, dass die Auflösung durch eine Reduktion der Anzahl von Quantisierungsstufen oder durch eine Reduktion der Anzahl der Bit zur Darstellung der Parameter reduziert wird.

Vorzugsweise ist ein komprimiertes tiefes neuronales Netz zu einem bereitgestellten tiefen neuronalen Netz strukturgleich, weshalb unter entsprechender Auflösung von Parametern oder Aktivierungen verstanden werden kann, dass die Parameter oder Aktivierungen an der gleichen Position des jeweils anderen tiefen neuronalen Netzes mit der entsprechenden Auflösung wiederzufinden sind.

Weiterhin wird vorgeschlagen, dass die Überbrückungsverbindung eine vorgebbare Anzahl der Schichten überbrückt. Die vorgebbare Anzahl entspricht einem möglichst großen Wert aus einem Wertebereich von einschließlich dem Wert eins bis zu einschließlich dem Wert der Gesamtzahl der Schichten des tiefen neuronalen Netzes minus dem Wert zwei, oder minus dem Wert eins. Abhängig davon, ob die Eingangs- und Ausgangsschicht des tiefen neuronalen Netz berücksichtigt werden, wird entsprechend der Wert eins oder zwei abgezogen.

Der Vorteil einer möglichst großen Anzahl von überbrückten Schichten ist der, dass dadurch möglichst Informationen einer der Schichten am Eingang so tief wie möglich in das tiefe neuronale Netz weitergeleitet werden. Dadurch stehen den tieferliegenden Schichten geringer vorverarbeitete Informationen zur Verfügung. Das Bereitstellen von geringer vorverarbeiteten Informationen schlägt sich besonders positiv in der Qualität des ermittelten Ausgangsergebnisses des tiefen neuronalen Netzes nieder.

Unter einem möglichst großen Wert kann verstanden werden, dass vorzugsweise Werte aus den 20% oder max. 10% der größten Werte dieses Wertebereichs gewählt werden. Es hat sich herausgestellt, dass sich der Vorteil, resultierend aus einer möglichst großen Anzahl von überbrückten Schichten, bereits auch schon bei einem Überbrücken von zwei oder mehr als zwei Schichten ergibt. Daher kann auch unter einem möglichst großen Wert verstanden werden, dass dieser größer gleich dem Wert zwei (≥ 2) gewählt wird.

Weiterhin wird vorgeschlagen, dass die Überbrückungsverbindung möglichst nahe am Eingang des tiefen neuronalen Netzes, insbesondere bei einer der vordersten Schichten der Reihenfolge der Schichten, beginnt. Ferner wird vorgeschlagen, dass die Überbrückungsverbindung möglichst nahe am Ausgang, insbesondere an einer der letzten Schichten der Reihenfolge, endet. Die vordersten Schichten können diejenigen Schichten sein, die in der Reihenfolge der Schichten zu Beginn angeordnet sind.

Prinzipiell gilt, dass einmal verlorengegangene Informationen nicht wiederhergestellt werden können. Da in Schichten nahe am Eingang typischerweise grundlegende Transformationen stattfinden, führt ein dortiger Informationsverlust zu einer stark verminderten Leistungsfähigkeit des tiefen neuronalen Netzes. Die letzten Schichten können im Gegensatz dazu meistens nur noch die letzten paar Performanceprozentpunkte herausholen. Daher haben Fehler in der Quantisierung in den tieferen Schichten eine geringere Auswirkung, da weniger bereits extrahierte Information verloren gehen.

Unter möglichst nahe am Eingang des tiefen neuronalen Netzes kann verstanden werden, dass die hinzugefügte Überbrückungsverbindung bei einer der Schichten des tiefen neuronalen Netzes, die in einer vorderen Hälfte der Reihenfolge angeordnet sind, beginnt. Die vordere Hälfte der Reihenfolge ist die Hälfte, die eine Eingangsschicht, welche eine Eingangsgröße des tiefen neuronalen Netzes erhält, umfasst. Entsprechend umfasst die hintere Hälfte der Reihenfolge eine Ausgangsschicht, welche ein Endergebnis des tiefen neuronalen Netz ausgibt. Vorzugsweise verbindet die hinzugefügte Überbrückungsverbindung eine Schicht der vorderen Hälfte mit einer Schicht der vorderen oder der hinteren Hälfte. Denkbar ist auch, dass die hinzugefügte Überbrückungsverbindung bei einer der ersten 5% oder 10% oder 20% der Schichten der Reihenfolge beginnt. Besonders bevorzugt beginnt die hinzugefügte Überbrückungsverbindung bei der ersten oder zweiten oder dritten Schicht der Reihenfolge der Mehrzahl der Schichten.

Weiterhin wird vorgeschlagen, dass entweder vor und/oder nach dem Schritt des Hinzufügens der Überbrückungsverbindung und/oder nach dem Schritt der Reduktion der Auflösung die nachfolgenden Schritte ausgeführt werden: Bereitstellen von Trainingsdaten, die jeweils Eingangsgrößen und den Eingangsgrößen zugeordnete Ausgangsgrößen umfassen. Daraufhin folgt ein Anlernen des tiefen neuronalen Netzes. Beim Anlernen werden die Parameter derart angepasst, dass das tiefe neuronale Netz jeweils abhängig von den Eingangsgrößen der Trainingsdaten jeweils deren zugeordnete Ausgangsgröße ermittelt.

Denkbar ist, dass die Abfolge von Anlernen und Reduzieren der Auflösung mehrmals hintereinander ausgeführt werden. Denkbar ist auch, dass der Schritt des Hinzufügens einer weiteren Überbrückungsverbindung ebenfalls beim mehrmals hintereinander Ausführen zumindest einmal mit ausgeführt wird.

Weiterhin wird vorgeschlagen, dass jede Schicht des tiefen neuronalen Netzes eine Mehrzahl von Neuronen umfasst, wobei alle Neuronen jeder Schicht in eine Mehrzahl von Gruppen aufgeteilt werden. Jede der Gruppen wird auf einer ihr zugeordneten Recheneinheit ausgeführt. Die Recheneinheiten verarbeitet jeweils zumindest eine Gruppe einer Schicht oder mehrere Gruppen unterschiedlicher Schichten. Beim Anlernen kann eine Mehrzahl von Pfaden durch das tiefe neuronale Netz, welches zumindest eine Überbrückungsverbindung enthält, gewählt werden. Es werden dann die einzelnen Pfade abhängig von jeweils einer Kostenfunktion unter Verwendung derjenigen Recheneinheiten, die zumindest eine der Gruppen derjenigen Schichten ausführt, durch welche der Pfad verläuft, angelernt. Die Pfade können getrennt voneinander oder überlagert angelernt werden.

Vorzugsweise benötigen die Pfade unterschiedlich viele Rechenressourcen (z.B. FLOPs), umfassen also zum Beispiel unterschiedlich viele Schichten des tiefen neuronalen Netzes. Beim Betreiben dieses, insbesondere komprimierten, tiefen neuronalen Netzes können dann gezielt die Recheneinheiten abhängig von einem der Pfade aktiviert werden. Beispielsweise werden beim Betreiben idealerweise zuerst so viele Recheneinheiten wie möglich deaktiviert, welche für den in Bezug auf Rechenressourcen unaufwendigsten Pfad nicht benötigt werden. Daraufhin können weitere Recheneinheiten (abhängig von weiteren verwendeten Pfaden) aktiviert werden, bis alle Recheneinheiten aktiviert sind, die für den in Bezug auf Rechenressourcen aufwendigsten Pfad, z.B. das komplette Netzwerk, benötigt werden. Alternativ kann beim Anlernen eine vorgebbare Anzahl von vorgebbaren, insbesondere zufällig gewählten, Recheneinheiten deaktiviert werden. Bei diesem Vorgehen wird das tiefe neuronale Netz besonders flexibel gegenüber Ausfällen von Neuronen und energiesparsam, da beim Betreiben des tiefen neuronalen Netz beliebige Recheneinheiten deaktiviert werden können.

Weiterhin wird vorgeschlagen, dass das komprimierte tiefe neuronale Netz gemäß der Aufteilung der Neuronen auf unterschiedliche Recheneinheiten betrieben wird, wobei einzelne Recheneinheiten deaktiviert werden können. Das Deaktivieren der Recheneinheiten beim Betreiben des komprimierten tiefen neuronalen Netzes kann abhängig von einem dem tiefen neuronalen Netz zur Verfügung gestellten Energiebudget sein.

Das Verteilen einer Funktionalität (alle Neuronen) der Schichten des tiefen neuronalen Netzes in Teilfunktionalitäten (Gruppen von Neuronen) auf eine Mehrzahl von Recheneinheiten führt dazu, dass bei deaktivieren einzelner Recheneinheiten Energie eingespart werden kann. Es können nun einzelne Recheneinheiten, wie CPUs, deaktiviert werden, wodurch effektiv einzelne Neuronen in dem Netz deaktiviert werden, um Energie einzusparen ohne dass die Genauigkeit des Ergebnisses drastisch sinkt, insbesondere wenn das Deaktivieren von Recheneinheiten (Neuronen) bereits beim Anlernen berücksichtigt wurde. Durch dieses Vorgehen kann auch ein besserer Energie-Genauigkeits-Kompromiss erzielt werden.

Weiterhin wird vorgeschlagen, dass das komprimierte tiefe neuronale Netz, welches gemäß dem ersten Aspekt komprimiert wurde, abhängig von einer erfassten Sensorgröße eines Sensors eine Ausgangsgröße ermittelt, die daraufhin zum Ermitteln einer Steuergröße mittels einer Steuereinheit verwendet werden kann.

Die Steuergröße kann zum Steuern eines Aktors eines technischen Systems verwendet werden. Das technische System kann zum Beispiel eine zumindest teilautonome Maschine, ein zumindest teilautonomes Fahrzeug, ein Roboter, ein Werkzeug, eine Werkmaschine oder ein Flugobjekt wie eine Drohne sein. Die Eingangsgröße kann bspw. abhängig von erfassten Sensordaten ermittelt und dem maschinellen Lernsystem bereitgestellt werden. Die Sensordaten können von einem Sensor, wie z.B. einer Kamera, des technischen Systems erfasst oder alternativ von extern empfangen werden.

In einem weiteren Ausführungsbeispiel ist das tiefe neuronale Netz eingerichtet, die Sensordaten zu klassifizieren.

In einem weiteren Aspekt wird ein Computerprogramm vorgeschlagen. Das Computerprogramm ist eingerichtet, eines der genannten Verfahren des ersten Aspektes der Erfindung auszuführen. Das Computerprogramm umfasst Anweisungen, die einen Computer veranlassen, eines dieser genannten Verfahren mit all seinen Schritten auszuführen, wenn das Computerprogramm auf dem Computer abläuft. Ferner wird ein maschinenlesbares Speichermodul vorgeschlagen, auf welchem das Computerprogramm gespeichert ist. Des Weiteren wird eine Vorrichtung vorgeschlagen, die eingerichtet ist, eines der Verfahren des ersten Aspektes auszuführen.

Ausführungsbeispiele der oben genannten Aspekte sind in den beiliegenden Zeichnungen dargestellt und in der nachfolgenden Beschreibung näher erläutert. Dabei zeigen:

### Kurze Beschreibung der Zeichnungen

- Fig. 0: eine schematische Darstellung eines tiefen neuronalen Netzes und eine Tabelle;
- Fig. 1: eine schematische Darstellung eines Fahrzeuges;
- Fig. 2: eine schematische Darstellung eines tiefen neuronalen Netzes mit einer Überbrückungsverbindung und einem Speicher;
- Fig. 3: eine schematische Darstellung einer Ausführungsform des Verfahrens zum Komprimieren des tiefen neuronalen Netzes;
- Fig. 4: eine schematische Darstellung einer Ausführungsform einer Vorrichtung, welche zum Anlernen des tiefen neuronalen Netzes verwendet werden kann.

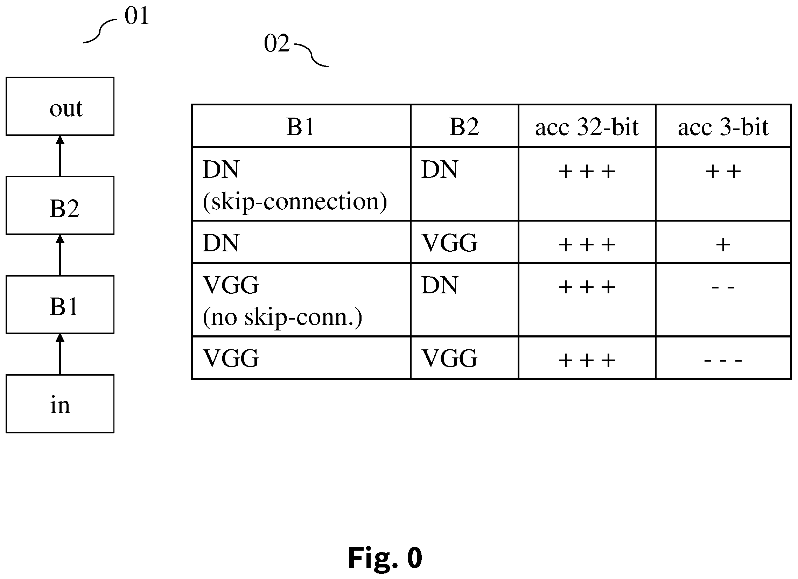

Figur 0 zeigt eine schematische Darstellung eines tiefen neuronalen Netzes (01). Das tiefe neuronale Netz (01) ist durch vier unterschiedliche Blöcke dargestellt. Ein erster Block (in) stellt schematisch eine Eingangsschicht des tiefen neuronalen Netzes (01) dar. Der erste Block ist mit einem zweiten Block (B1) verbunden. Dieser zweite Block (B1) ist wieder mit einem dritten Block (B2) verbunden, der wiederum mit einem vierten Block (out) verbunden ist. Der vierte Block (out) stellt schematisch eine Ausgangsschicht des tiefen neuronalen Netzes (01) dar. Der zweite und dritte Block (B1, B2) stellen jeweils ein Teil der verdeckten Schichten (engl. hidden layer) des tiefen neuronalen Netzes (01) dar. In einer ersten Ausführungsform des zweiten Blockes (B1), kann dieser Block dicht vermaschte Schichten (engl. Dense Net, kurz DN) darstellen, die Überbrückungsverbindungen (engl. skip-connection) aufweisen. In einer zweiten Ausführungsform des zweiten Blockes (B1) kann dieser Block ausschließlich vorwärtsgerichtete Schichten (VGG), also keine Überbrückungsverbindungen, aufweisen. Das gleiche gilt auch für den dritten Block (B2).

Die Tabelle (02) zeigt Genauigkeitsergebnisse des tiefen neuronalen Netzes (01), mit unterschiedlich positionierten Überbrückungsverbindungen innerhalb des tiefen neuronalen Netzes (01) und mit unterschiedlich stark quantisierten (32- oder 3-bit) Parametern des tiefen neuronalen Netzes (01). In der abgebildeten Tabelle (02) der Figur 0 sind in der ersten Zeile die beiden Blöcke B1 und B2 sowie eine erste Genauigkeit (acc 32-bit) und eine zweite Genauigkeit (acc 3-bit) eingetragen. Die erste Genauigkeit (acc 32- Bit) gibt an, welche Genauigkeit ermittelte Ergebnisse des tiefen neuronalen Netzes (01) mit einer Parameterauflösung über 32 Bit erreichen, verglichen mit Referenzdaten, wie z.B. gelabelte Trainingsdaten. In den darunterliegenden Spalten der Blöcke B1 und B2, sind alle vier mögliche Ausführungsformen des tiefen neuronalen Netzes (01) mit den unterschiedlich konfigurierten Schichten (DN, VGG) aufgelistet. Rechts neben den möglichen Ausführungsformen des tiefen neuronalen Netzes (01) sind die ermittelten Genauigkeiten (acc) für unterschiedliche Auflösungen der Parameter des tiefen neuronalen Netzes (01) aufgelistet. Die Tabelle zeigt deutlich, dass es vorteilhaft ist, wenn der zweite Block (B1) dicht vermaschte Schichten mit Überbrückungsverbindung (DN) enthält, da hierbei die Genauigkeit bei einer Quantisierung der Parameter mit beispielsweise 3 Bit immer noch mit einmal Plus (+) bewertet wird, wohingegen die Genauigkeit bei Verwendung ausschließlich vorwärts gerichteter Schichten ohne Überbrückungsverbindung (VGG) für den zweiten Block (B1) mit zweimal Minus (- -) bei gleicher Quantisierung (3 Bit) bewertet wird. Dies zeigt eindeutig, dass es hinsichtlich der Genauigkeit des tiefen neuronalen Netzes (01) mit stark quantisierten Parameter (z.B. mit 3 Bit) entscheidend ist, Überbrückungsverbindungen nahe der Eingangsschicht des tiefen neuronalen Netzes (01) zu verwenden.

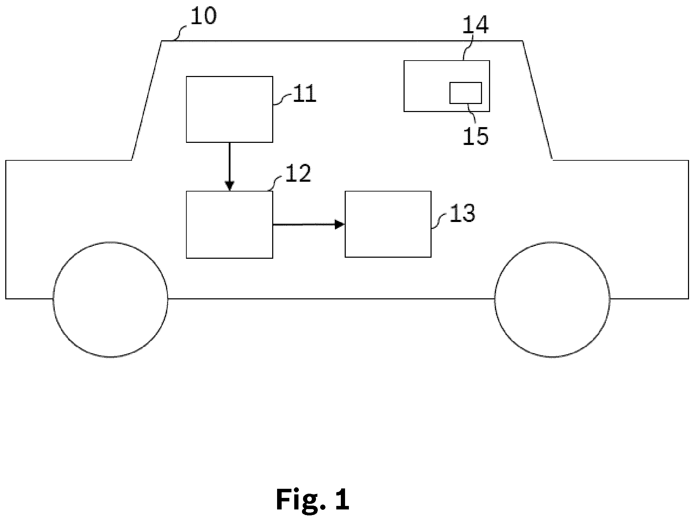

Figur 1 zeigt eine schematische Darstellung eines zumindest teilautonomen Roboters, welcher in einem ersten Ausführungsbeispiel durch ein zumindest teilautonomes Fahrzeug (10) gegeben ist. In einem weiteren Ausführungsbeispiel kann der zumindest teilautonome Roboter ein Service-, Montage- oder stationärer Produktionsroboter, alternativ ein autonomes Flugobjekt, wie eine Drohne, sein.

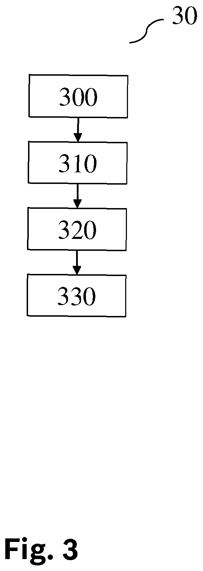

Das zumindest teilautonome Fahrzeug (10) kann eine Erfassungseinheit (11) umfassen. Die Erfassungseinheit (11) kann zum Beispiel eine Kamera sein, welche eine Umgebung des Fahrzeugs (10) erfasst. Die Erfassungseinheit (11) ist mit einem tiefen neuronalen Netz (12), insbesondere des tiefen neuronalen Netzes (12) erhältlich nach Ausführen des Verfahrens gemäß Figur 3, verbunden. Das tiefe neuronale Netz (12) ermittelt abhängig von einer bereitgestellten Eingangsgröße, z.B. bereitgestellt von der Erfassungseinheit (11), und in Abhängigkeit einer Mehrzahl von Parametern des tiefen neuronalen Netzes (12) eine Ausgangsgröße. Die Ausgangsgröße kann an eine Steuerungseinheit (13) weitergeleitet werden.

Die Steuerungseinheit (13) steuert in Abhängigkeit der Ausgangsgröße des tiefen neuronalen Netzes (12) einen Aktor, vorzugsweise steuert diesen den Aktor derart, dass das Fahrzeug (10) ein kollisionsfreies Manöver ausführt. Im ersten Ausführungsbeispiel kann der Aktor ein Motor oder ein Bremssystem des Fahrzeugs (10) sein.

In einem weiteren Ausführungsbeispiel kann der teilautonome Roboter ein Werkzeug, eine Werkmaschine oder ein Fertigungsroboter sein. Ein Material eines Werkstückes kann mittels des maschinellen Lernsystem (12) klassifiziert werden. Der Aktor kann hierbei z.B. ein Motor, der einen Schleifkopf betreibt, sein.

Ferner umfasst das Fahrzeug (10), insbesondere der teilautonome Roboter, eine Recheneinheit (14) und ein maschinenlesbares Speicherelement (15). Auf dem Speicherelement (15) kann ein Computerprogramm gespeichert sein, welches Befehle umfasst, die beim Ausführen der Befehle auf der Recheneinheit (14) dazu führen, dass mittels der Recheneinheit (14) das tiefe neuronale Netz (12) betrieben wird.

In einem weiteren Ausführungsbeispiel kann das tiefe neuronale Netz (12) in einem Sensor bzw. in der Erfassungseinheit (11) integriert sein, um die erfassten Sensorwerte mittels des tiefen neuronalen Netzes (12) zu verarbeiten. Die verarbeiteten Sensorwerte, mittels des tiefen neuronalen Netzes (12), sind vorzugsweise komprimierte oder bereits ausgewertete Sensorwerte, sodass diese anschließend effizient an beispielsweise die Steuerungseinheit (13) übertragen werden können. Vorzugsweise sind hierbei zumindest die Parameter auf einem Chip des Sensors gespeichert oder das tiefe neuronale Netz in Hardware auf dem Chip integriert.

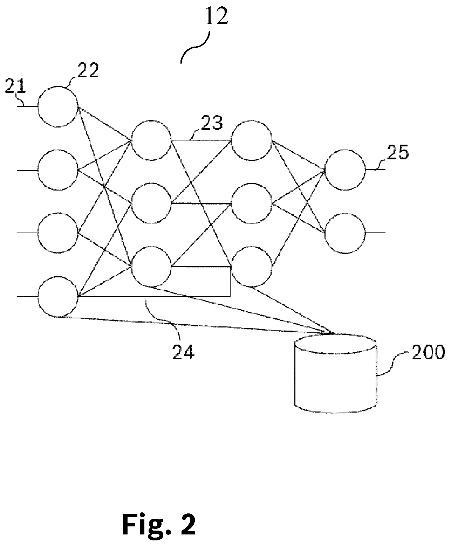

Figur 2 zeigt eine schematische Darstellung des tiefen neuronalen Netzes (12) aus Figur 1, welches in dieser Ausführungsform durch ein tiefes neuronales Netz mit vier Schichten gegeben ist. In weiteren Ausführungsformen kann das tiefe neuronale Netz (12) durch ein faltendes neuronales Netz (engl. Convolutional Neural Network) gegeben sein.

Das tiefe neuronale Netz (12) umfasst mehrere Schichten, die jeweils mittels Verbindungen (23) miteinander verbunden sind und die jeweils mehrere Neuronen (22) umfassen. Ferner weist das tiefe neuronale Netz (12) eine Überbrückungsverbindung (24) auf. Die Überbrückungsverbindung (24) in Figur 2 hat den Effekt, dass eine Ausgangsgröße der ersten Schicht des tiefen neuronalen Netzes (12) direkt an die dritte Schicht weitergeleitet und hier als Eingangsgröße bereitgestellt wird. Damit wird die zweite Schicht überbrückt. Es sei angemerkt, dass die Überbrückungsverbindung (24) auch in die entgegengesetzte Richtung ausgestaltet sein kann. Beispielsweise kann eine Ausgangsgröße der dritten Schicht mittels einer rekurrenten Überbrückungsverbindung an eine vorhergehende Schicht als Eingangsgröße zugeführt werden.

Das tiefe neuronale Netz (12) ermittelt schichtweise abhängig von einer Eingangsgröße (21) des tiefen neuronalen Netzes (12) eine Ausgangsgröße (25).

Hierfür ermittelt jede Schicht abhängig von der ihr bereitgestellten Eingangsgröße und abhängig von den Parametern dieser Schicht, eine Ausgangsgröße. Die Ausgangsgröße wird daraufhin durch die Verbindungen (23) an die weiteren Schichten weitergeleitet.

In diesem Ausführungsbeispiel können die Parameter der jeweiligen Schichten beispielhaft jeweils zumindest eine erste Größe oder/und eine zweite Größe und eine dritte Größe aufweisen. Die Schichten können jeweils die Eingangsgröße mittels der ersten Größe gewichten oder/und mittels der zweiten Größe filtern. Die Schichten können zu der gewichteten/gefilterten Eingangsgröße die dritte Größe dazu addieren. Optional wird diese verarbeitete Eingangsgröße abhängig von dem Parameter mittels einer Aktivierungsfunktion (z.B. ReLu) weiterverarbeitet.

Die Parameter, insbesondere der Schichten, des tiefen neuronalen Netzes (12) können in einem Speicher (200) hinterlegt sein.

Figur 3 zeigt eine schematische Darstellung eines Verfahrens (30) zum Komprimieren eines bereitgestellten tiefen neuronalen Netzes.

Das Verfahren beginnt mit Schritt 300. In diesem Schritt wird ein tiefes neuronales Netz bereitgestellt. Das tiefe neuronale Netz kann ein ausschließlich vorwärtsgerichtetes neuronales Netz sein, welches keine Überbrückungsverbindungen enthält. Alternativ kann das bereitgestellte tiefe neuronale Netz auch ein vorwärtsgerichtetes neuronales Netz sein, welches zumindest eine Überbrückungsverbindung enthält. Das bereitgestellte tiefe neuronale Netz kann ein bereits (vor-)trainiertes oder ein neu initialisiertes tiefes neuronales Netz sein. Parameter der Schichten des tiefen neuronalen Netzes können eine hohe Auflösung, beispielsweise 32 Bit, aufweisen.

Optional kann nach Schritt 300 der nachfolgende Schritt 310 ausgeführt werden. Hierin werden Trainingsdaten dem, insbesondere neu initialisierten, tiefen neuronalen Netz bereitgestellt. Die Trainingsdaten umfassen vorzugsweise Trainingseingangsgrößen und jeweils zugeordnete Trainingsausgangsgrößen (engl. label). Die Trainingseingangsgrößen können zum Beispiel Bilder einer Kamera sein und die Trainingsausgangsgrößen können beispielsweise eine Klassifizierung oder Segmentierung der Kamerabilder sein. Zusätzlich oder alternativ könne die Trainingsdaten eine Mehrzahl von gelabelten Tonsequenzen, Textausschnitte, Radar-, Lidar- oder Ultraschall-signale umfassen. Daraufhin wird in Schritt 310 das tiefe neuronale Netz basierend auf den bereitgestellten Trainingsdaten angelernt. Beim Anlernen des tiefen neuronalen Netzes werden die Parameter der jeweiligen Schichten derart angepasst, sodass das tiefe neuronale Netz, abhängig von den bereitgestellten Trainingseingangsgrößen, die jeweils zugeordneten Ausgangsgrößen ermittelt.

Vorzugsweise wird das Anlernen abhängig von einer Kostenfunktion durchgeführt, die beispielsweise eine Differenz zwischen den ermittelten Ausgangsgrößen und der Trainingsausgangsgrößen charakterisiert. Die Kostenfunktion kann mittels eines Gradiententabstiegsverfahrens hinsichtlich der Parameter optimiert werden. Beim Gradientenabstiegsverfahren wird die Kostenfunktion iterativ optimiert, wobei üblicherweise ein Gradient mit einer Auflösung von 32 Bit verwendet wird. Die Parameter können abhängig von dem Gradienten angepasst werden, wodurch sich die Kostenfunktion verändert, so dass diese idealerweise minimiert oder maximiert wird. Da der Gradient üblicherweise eine Auflösung von 32 Bit aufweist, werden die angepassten Parameter abhängig von dem Gradienten mit vorzugsweise einer Auflösung von 32 Bit in dem Speicher (200) hinterlegt.

Nachdem der Schritt 300 oder der optionale Schritt 310 beendet wurde, wird Schritt 320 ausgeführt. Im Schritt 320 wird dem bereitgestellten, tiefen neuronalen Netz eine Überbrückungsverbindung hinzugefügt. Vorzugsweise wird die Überbrückungsverbindung zu dem tiefen neuronalen Netz derart hinzugefügt, dass diese bei einer Schicht nahe der Eingangsschicht des tiefen neuronalen Netzes beginnt und/oder möglichst viele Schichten überbrückt.

Nachdem die Überbrückungsverbindung in Schritt 320 hinzugefügt wurde, folgt der nachfolgende Schritt 330. Hierin wird eine Auflösung der Parameter des tiefen neuronalen Netzes reduziert. Bevorzugt erfolgt die Reduktion der Auflösung der Parameter durch eine Quantisierung der Parameter. Wenn das tiefe neuronale Netz gemäß dem optionalen Schritt 310 angelernt wurde, dann haben die Parameter jeweils eine Auflösung von 32 Bit. Beispielsweise kann dann in Schritt 330 die Auflösung von 32 Bit auf 16, 8, 4 oder 3 Bit reduziert werden. Zusätzlich kann zu der Quantisierung der Parameter die Auflösung der Aktivierungen reduziert werden, vorzugsweise relativ zu der Quantisierung der Parameter der jeweiligen Schichten.

Die Quantisierung der Parameter kann mittels einer linearen Quantisierung, aber auch mit einer nichtlinearen Quantisierung, beispielsweise einer logarithmischen Quantisierung, durchgeführt werden. Denkbar sind neben den genannten deterministischen Quantisierungen, auch stochastische Quantisierungen.

Beispielsweise kann die Quantisierung der Parameter und/oder der Aktivierungen derart durchgeführt werden, dass alle Schichten die gleiche Quantisierung aufweisen, beispielsweise eine Quantisierung mit 8 Bit. Alternativ können gezielt diejenigen Parameter der Schichten, die mit mehreren weiteren Schichten verbunden sind, stärker quantisiert werden, beispielsweise mit 5 Bit.

Nachdem die Auflösung der Parameter reduziert wurde, können die Parameter mit reduzierter Auflösung nach Schritt 330 in dem Speicher (200) hinterlegt werden. Denkbar ist, dass nach Schritt 320 und vor Ausführen des Schrittes 330 das tiefe neuronale Netz angelernt wird.

Damit endet das Verfahren (30). Es sei angemerkt, dass die Schritte 310 bis 330 zyklisch mehrfach hintereinander wiederholt werden können, bis ein vorgebbares Abbruchkriterium erfüllt ist. Optional kann bei Verwendung mehrerer Stapel (engl. batches) von Trainingsdaten nach Beenden des Schrittes 330, das tiefe neuronale Netz mit den neu hinterlegten Parametern bspw. für einen weiteren Stapel, beginnend mit Schritt 310, erneut angelernt werden.

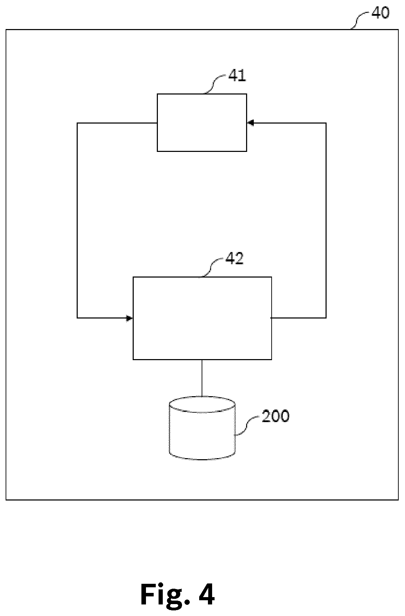

Figur 4 zeigt eine schematische Darstellung einer Vorrichtung (40) zum Anlernen des tiefen neuronalen Netzes (12), insbesondere zum Ausführen des Schrittes 310 zum Komprimieren des tiefen neuronalen Netzes (12). Die Vorrichtung (40) umfasst ein Trainingsmodul (41) und ein zu trainierendes Modul (42). Dieses zu trainierende Modul (42) beinhaltet das tiefe neuronale Netz (12). Die Vorrichtung (40) zum Anlernen des tiefen neuronalen Netzes (12), lernt abhängig von Ausgangsgrößen des tiefen neuronalen Netzes (12) und bevorzugt mit vorgebbaren Trainingsdaten das tiefe neuronale Netz (12) an. Während des Anlernens werden Parameter des tiefen neuronalen Netzes (12), die in dem Speicher (200) hinterlegt sind, angepasst.

## Patentansprüche

1. Computerimplementiertes Verfahren zum Komprimieren eines tiefen neuronalen Netzes (12),
wobei das tiefe neuronale Netz (12) eine Mehrzahl von Schichten umfasst, die nach einer vorgebbaren Reihenfolge jeweils eingangsseitig mit ihrer unmittelbar vorhergehenden Schicht der vorgebbaren Reihenfolge verbunden sind, und
wobei jeder Schicht Parameter zugeordnet sind,
umfassend folgende Schritte:
Hinzufügen einer Überbrückungsverbindung (engl. skip connection) (24) zu dem tiefen neuronalen Netz (12),
wobei die Überbrückungsverbindung (24) eine der Mehrzahl der Schichten eingangsseitig zusätzlich mit einer weiteren Schicht, die eine mittelbar vorhergehende Schicht in der Reihenfolge ist, verbindet;
nach dem Schritt des Hinzufügens der Überbrückungsverbindung:
Bereitstellen von Trainingsdaten, die jeweils Eingangsgrößen und den Eingangsgrößen zugeordnete Ausgangsgrößen umfassen,
Anlernen des tiefen neuronalen Netzes,
wobei beim Anlernen die Parameter derart angepasst werden, dass das tiefe neuronale Netz (12) jeweils abhängig von den Eingangsgrößen der Trainingsdaten jeweils deren zugeordnete Ausgangsgröße ermittelt; und
Reduzieren einer Auflösung der Parameter der Schichten des angelernten neuronalen Netzes (12) umfassend die hinzugefügte Überbrückungsschicht (24), wobei eine Auflösung der Parameter der Schichten durch eine Anzahl der Bit gegeben ist.

2. Verfahren nach Anspruch 1, wobei die Parameter quantisiert sind, und wobei die Auflösung der Parameter der Schichten durch eine Reduktion einer Wortbreite, insbesondere einer Anzahl von Bit zur Darstellung der quantisierten Parameter, reduziert wird,
wobei die Auflösung der Parameter derjenigen Schicht, die mit einer Mehrzahl von, insbesondere vorhergehenden, Schichten unmittelbar eingangsseitig verbunden ist, geringerer ist als die Auflösung der Parameter oder der Aktivierungen derjenigen Schichten, die mit genau einer Schicht unmittelbar eingangsseitig verbunden sind.

3. Verfahren nach einem der vorhergehenden Ansprüche, wobei die Überbrückungsverbindung (24) eine vorgebbare Anzahl der Schichten überbrückt,
wobei die vorgebbare Anzahl einem, insbesondere möglichst großen, Wert aus einem Wertebereich von einschließlich dem Wert eins bis zu einschließlich dem Wert der Gesamtzahl der Schichten des tiefen neuronalen Netzes (12) minus dem Wert eins, entspricht.

4. Verfahren nach einem der vorhergehenden Ansprüche, umfassend folgende weitere Schritte, welche entweder vor dem Schritt des Hinzufügens der Überbrückungsverbindung und/oder nach dem Schritt der Reduktion der Auflösung ausgeführt werden:
Bereitstellen von Trainingsdaten, die jeweils Eingangsgrößen und den Eingangsgrößen zugeordnete Ausgangsgrößen umfassen,
Anlernen des tiefen neuronalen Netzes,
wobei beim Anlernen die Parameter derart angepasst werden, dass das tiefe neuronale Netz (12) jeweils abhängig von den Eingangsgrößen der Trainingsdaten jeweils deren zugeordnete Ausgangsgröße ermittelt.

5. Computerprogramm, welches Befehle umfasst, die beim Ausführen dieser mittels eines Computers, den Computer veranlassen das Verfahren nach einem der Ansprüche 1 bis 4 auszuführen.

6. Maschinenlesbares Speichermedium (15), auf welchem das Computerprogramm nach Anspruch 5 hinterlegt ist.

7. Vorrichtung (14), die eingerichtet ist, das Verfahren nach einem der Ansprüche 1 bis 4 auszuführen.

## Claims

1. Computer-implemented method for compressing a deep neural network (12),
wherein the deep neural network (12) comprises a plurality of layers which, according to a predefinable order, are each connected on the input side to their directly preceding layer of the predefinable order, and
wherein parameters are assigned to each layer,
comprising the following steps:
adding a skip connection (24) to the deep neural network (12),
wherein the skip connection (24) additionally connects one of the plurality of layers on the input side to a further layer, which is an indirectly preceding layer in the order;
after the step of adding the skip connection:
providing training data comprising in each case input variables and output variables assigned to the input variables,
training the deep neural network,
wherein, during training, the parameters are adapted in such a way that the deep neural network (12), in each case depending on the input variables of the training data, determines in each case the assigned output variable thereof; and
reducing a resolution of the parameters of the layers of the trained neural network (12) comprising the added skip layer (24), wherein a resolution of the parameters of the layers is given by a number of the bits.

2. Method according to Claim 1, wherein the parameters are quantized, and
wherein the resolution of the parameters of the layers is reduced by a reduction of a word width, in particular a number of bits for representing the quantized parameters,
wherein the resolution of the parameters of that layer which is connected to a plurality of, in particular preceding, layers directly on the input side is lower than the resolution of the parameters or of the activations of those layers which are connected to exactly one layer directly on the input side.

3. Method according to either of the preceding claims, wherein the skip connection (24) skips a predefinable number of the layers,
wherein the predefinable number corresponds to a value, in particular as large as possible, from a value range from and including the value one up to and including the value of the total number of layers of the deep neural network (12) minus the value one.

4. Method according to any of the preceding claims, comprising the following further steps carried out either before the step of adding the skip connection and/or after the step of reducing the resolution:
providing training data comprising in each case input variables and output variables assigned to the input variables,
training the deep neural network,
wherein, during training, the parameters are adapted in such a way that the deep neural network (12), in each case depending on the input variables of the training data, determines in each case the assigned output variable thereof.

5. Computer program comprising instructions which, when they are executed by means of a computer, cause the computer to carry out the method according to any of Claims 1 to 4.

6. Machine-readable storage medium (15) on which the computer program according to Claim 5 is stored.

7. Device (14) configured to carry out the method according to any of Claims 1 to 4.

## Revendications

1. Procédé mis en œuvre par ordinateur pour comprimer un réseau neuronal profond (12),
le réseau neuronal profond (12) comportant une pluralité de couches qui, selon un ordre pouvant être prédéfini, sont respectivement reliées, côté entrée, à la couche qui les précède immédiatement dans l'ordre pouvant être prédéfini, et
des paramètres étant associés à chaque couche,
comprenant les étapes suivantes :
ajout d'une connexion de contournement (en anglais « skip connection ») (24) au réseau neuronal profond (12),
la connexion de contournement (24) reliant l'une de la pluralité de couches côté entrée en plus à une couche supplémentaire, qui est une couche qui précède indirectement dans l'ordre ;
après l'étape de l'ajout de la connexion de contournement :
fourniture de données d'entraînement, qui comprennent respectivement des grandeurs d'entrée et des grandeurs de sortie associées aux grandeurs d'entrée,
apprentissage du réseau neuronal profond,
lors de l'apprentissage, les paramètres étant adaptés de telle sorte que le réseau neuronal profond (12) détermine, respectivement en fonction des grandeurs d'entrée des données d'apprentissage, respectivement la grandeur de sortie qui leur est associée ; et
réduction d'une résolution des paramètres des couches du réseau neuronal (12) entraîné comprenant la couche de contournement (24) ajoutée, une résolution des paramètres des couches étant donnée par un nombre de bits.

2. Procédé selon la revendication 1, les paramètres étant quantifiés et la résolution des paramètres des couches étant réduite par une réduction d'une largeur de mot, notamment d'un nombre de bits servant à représenter les paramètres quantifiés,
la résolution des paramètres de la couche qui est directement reliée à une pluralité de couches, notamment précédentes, du côté de l'entrée étant inférieure à la résolution des paramètres ou des activations des couches qui sont directement reliées à exactement une couche du côté de l'entrée.

3. Procédé selon l'une des revendications précédentes, dans lequel la connexion de contournement (24) contourne un nombre de couches pouvant être prédéfini
le nombre pouvant être prédéfini correspondant à une valeur, en particulier aussi grande que possible, issue d'une plage de valeurs allant de la valeur un incluse à la valeur incluse du nombre total des couches du réseau neuronal profond (12) moins la valeur un.

4. Procédé selon l'une des revendications précédentes, comprenant les étapes supplémentaires suivantes, lesquelles sont exécutées soit avant l'étape d'ajout de la connexion de contournement, soit après l'étape de réduction de la résolution :
fourniture de données d'entraînement, qui comprennent respectivement des grandeurs d'entrée et des grandeurs de sortie associées aux grandeurs d'entrée,
apprentissage du réseau neuronal profond,
lors de l'apprentissage, les paramètres étant adaptés de telle sorte que le réseau neuronal profond (12) détermine, respectivement en fonction des grandeurs d'entrée des données d'entraînement, respectivement la grandeur de sortie qui leur est associée.

5. Programme informatique, lequel comporte des instructions qui, lorsqu'elles sont exécutées au moyen d'un ordinateur, amènent l'ordinateur à mettre en œuvre le procédé selon l'une des revendications 1 à 4.

6. Support de stockage lisible par machine (15), sur lequel est enregistré le programme informatique selon la revendication 5.

7. Dispositif (14), qui est conçu pour mettre en œuvre le procédé selon l'une des revendications 1 à 4.
